# EUROPÄISCHE PATENTSCHRIFT

(11) **EP 0 644 393 B1**
(45) Veröffentlichungstag und Bekanntmachung des Hinweises auf die Patenterteilung: **17.09.1997**
(21) Anmeldenummer: 94112903.3
(22) Anmeldetag: 19.08.1994
(51) Int. Cl.: F28F 3/12

(54) **Rohrradiator**
Tube radiator
Radiateur tubulaire

(30) Priorität: 16.09.1993 DE 9314040 U
(43) Veröffentlichungstag der Anmeldung: 22.03.1995
(73) Patentinhaber: Zehnder-Beutler GmbH, D-77933 Lahr (DE)
(72) Erfinder: Kriese, Peter, D-77948 Friesenheim (DE); Oberle, Günter, D-77749 Hohberg (DE)
(74) Vertreter: Stenger, Watzke & Ring Patentanwälte

(56) Entgegenhaltungen:
- FR-A- 2 566 306
- FR-A- 2 685 462

## Beschreibung

Die Erfindung betrifft ein Verfahren zur Herstellung von Rohrradiatoren aus mehreren nebeneinander angeordneten Radiatorelementen, die jeweils durch Verschweißen zweier mit Rohranschlußstutzen versehenen Halbschalen zu Endstücken und durch Einschweißen mehrerer Rohre zwischen die Rohranschlußstutzen der Endstücke hergestellt werden.

Derartige Rohrradiatoren sind beispielsweise als Heizkörper in Wohn- oder Arbeitsräumen bekannt. Die Rohrradiatoren sind aus mehreren nebeneinander angeordneten Radiatorelementen zusammengesetzt, so daß sie sich leicht in der gewünschten Länge herstellen lassen. Jedes Radiatorelement besteht aus zwei Endstücken, die mit Rohranschlußstutzen versehen sind, und aus mehreren zwischen den Rohranschlußstutzen eingesetzten Rohren, durch die die Endstücke miteinander verbunden sind. Durch die Länge der Rohre kann die Bauhöhe der Radiatorelemente variabel gestaltet und den jeweiligen Anforderungen angepaßt werden.

Im Hinblick auf eine wirtschaftliche Herstellung der einen Hohlraum bildenden Endstücke sind diese aus miteinander verschweißten Halbschalen zusammengesetzt. Auch die Rohre sind zwischen den Endstücken mit den Rohranschlußstutzen verschweißt. Da gemäß dem Stand der Technik alle Schweißverbindungen durch Abbrennstumpfschweißung hergestellt werden, bildet sich an den Fügestellen der bekannten Rohrradiatoren ein Grat aus. Um den Rohrradiatoren ein angemessenes Erscheinungsbild zu geben und die Gefahr einer Verletzung an den scharfkantigen Graten zu beseitigen, müssen die Schweißnähte entgratet und geschliffen werden. Diese zusätzlichen Arbeitsschritte verteuern die Herstellungskosten für Rohrradiatoren.

Davon ausgehend liegt der Erfindung die **Aufgabe** zugrunde, einen Rohrradiator der eingangs beschriebenen Art zu schaffen, dessen Herstellung durch eine geringere Anzahl von Arbeitsschritten preiswerter möglich ist.

Die Lösung dieser Aufgabenstellung durch die Erfindung ist dadurch gekennzeichnet, daß die Halbschalen miteinander gratfrei durch Laserschweißen verschweißt werden und daß die Rohre gratfrei mit den Rohranschlußstutzen durch Kondensatorentladungsschweißen verschweißt werden.

Aus der FR-A-2 685 462 ist zwar bereits ein Verfahren zur Herstellung von industriellen Plattenwärmetauschern bekannt, bei dem einzelne Platten des Plattenwärmetauschers mittels Laserschweißens miteinander verschweißt werden, für die Herstellung von insbesondere im Wohnungsbereich benutzten Rohrradiatoren ist das gratfreie Verschweißen mittels Laserschweißen oder Kondensatorentladungsschweißen jedoch aus dem Stand der Technik nicht bekannt.

Durch die erfindungsgemäße grat freie Schweißverbindung einerseits zwischen den Halbschalen und andererseits zwischen den Rohren und den Endstücken kann auf eine Nachbearbeitung der Schweißnähte verzichtet werden, so daß sich der Herstellungspreis für die Rohrradiatoren reduziert. Die Halbschalen sind durch ein Laserschweißen miteinander verbunden, da ein Laser exakt auf die entsprechende Schweißstelle ausgerichtet werden kann und sich über den Energieeintrag die Dicke der aufgeschmolzenen Schicht in der Schweißnaht bestimmen läßt. Aufgrund der einfachen Handhabung des Lasers erübrigt sich beim Fügen der Halbschalen der Einsatz besonders geformter Werkzeuge, die zu einer Beschädigung der Halbschalenoberfläche führen können. Die Rohre sind durch Kondensatorenentladungsschweißen mit den Anschlußstücken verschweißt, so daß die Schweißnähte von hoher Qualität sind. Da die Rohrradiatoren nach dem Fügen keine Grate aufweisen, entfallen Bearbeitungsschritte, mit denen die Schweißnähte an die Oberfläche des Rohrradiators angepaßt werden. Darüber hinaus entfällt die Gefahr, daß durch das Entgraten Beschädigungen der Rohrradiatoren auftreten. Außerdem wird durch den Wegfall von Schweißmaterial eine Materialeinsparung erzielt.

Auf der Zeichnung ist ein Ausführungsbeispiel eines Rohrradiators gemäß der Erfindung schematisch dargestellt, und zwar zeigen:
- Fig. 1: eine Vorderansicht des Rohrradiators und
- Fig. 2: einen Längsschnitt gemäß der Linie II-II in Fig. 1.

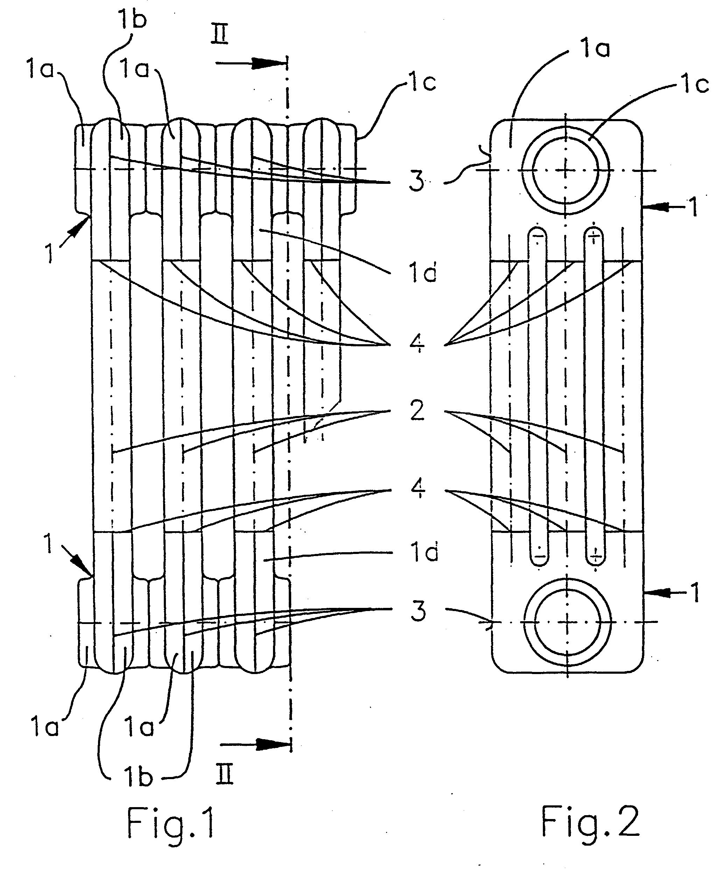

Die Fig. 1 zeigt einen aus mehreren nebeneinander angeordneten Radiatorelementen bestehenden Rohrradiator. Jedes Radiatorelement besteht aus zwei Endstücken 1, zwischen denen, wie in Fig. 2 deutlicher zu erkennen ist, jeweils drei Rohre 2 eingeschweißt sind. Jedes Endstück 1 ist aus zwei miteinander verschweißten Halbschalen 1a, 1b zusammengesetzt. Zwischen den Halbschalen 1a, 1b ist eine umlaufende Schweißnaht 3 ausgebildet. Die Endstücke 1 weisen beidseitig von der durch die Rohre gebildeten Ebene abgehobene Öffnungen mit einer ringförmigen Stirnfläche 1c auf. Die benachbarten Radiatorelemente liegen an den Stirnflächen 1c aneinander an, so daß die durch die benachbarten Endstücke 1 gebildeten Hohlräume miteinander verbunden und abgedichtet sind.

Innenliegend sind an den Endstücken 1 entsprechend der Anzahl der Rohre 2 Rohranschlußstutzen 1d ausgebildet, deren äußerer Durchmesser dem äußeren Durchmesser der Rohre 2 entspricht. Die Rohre 2 sind an ihren Enden mit den Rohranschlußstutzen 1d verschweißt, so daß sie die durch die Endstutzen 1 gebildeten Hohlräume miteinander verbinden.

Wie in Fig. 1 deutlicher zu erkennen, ist die durch Laserschweißen hergestellte Schweißnaht 3 gratfrei, so daß die Oberfläche der Endstücke 1 im Bereich der Schweißnaht 3 eben und glatt ist. Auch die durch Kondensatorenentladungsschweißen hergestellte Schweißnaht 4 ist gratfrei ausgebildet, so daß der Übergang zwischen den Rohren 2 und den Endstücken 1 glatt ist und keiner weiteren Nachbearbeitung bedarf.

Durch die gratfreien Schweißverbindungen zwischen den Halbschalen 1a, 1b sowie zwischen den Rohren 2 mit den Endstücken 1 kann auf die Nachbearbeitung der gesamten Fügestellen verzichtet werden, so daß die Kosten für die Fertigungsschritte "Entgraten" und "Schleifen" für jedes Radiatorelement entfallen.

### Bezugszeichenliste:

- 1: Endstück
- 1a: Halbschale
- 1b: Halbschale
- 1c: Stirnfläche
- 1d: Rohranschlußstutzen
- 2: Rohr
- 3: Schweißnaht
- 4: Schweißnaht

## Patentansprüche

1. Verfahren zur Herstellung von Rohrradiatoren aus mehreren nebeneinander angeordneten Radiatorelementen, die jeweils durch Verschweißen zweier mit Rohranschlußstutzen (1d) versehenen Halbschalen (1a, 1b) zu Endstücken (1) und durch Einschweißen mehrerer Rohre (2) zwischen die Rohranschlußstutzen (1d) der Endstücke (1) hergestellt werden,
dadurch gekennzeichnet,
daß die Halbschalen (1a, 1b) miteinander gratfrei durch Laserschweißen verschweißt werden und daß die Rohre (2) gratfrei mit den Rohranschlußstutzen (1d) durch Kondensatorentladungsschweißen verschweißt werden.

## Claims

1. Method for producing tube radiators comprising a plurality of adjacent radiator elements, which are in each case produced by welding together two half-shells (1a, 1b), which are provided with tube connection stubs (1d), to form end pieces (1) and by welding a plurality of tubes (2) in between the tube connection stubs (1d) of the end pieces (1), characterized in that the half-shells (1a, 1b) are welded together without flash by laser welding and in that the tubes (2) are welded to the tube connection stubs (1d) without flash by capacitor discharge welding.

## Revendications

1. Procédé de fabrication de radiateurs tubulaires à partir de plusieurs éléments de radiateur qui sont disposés les uns à côté des autres et qui sont fabriqués à chaque fois en soudant deux demi-coques (1a, 1b) munies de raccords de tubes (1d) pour former des extrémités (1) et en soudant plusieurs tubes (2) entre les raccords de tubes (1d) des extrémités (1),
caractérisé en ce que l'on soude ensemble les demi-coques (1a, 1b) sans bavure par un soudage au laser et en ce que l'on soude les tubes (2) sans bavure aux raccords de tubes (1d) par un soudage à décharge de condensateurs.
